# EUROPÄISCHE PATENTSCHRIFT

(11) **EP 1 685 174 B1**
(45) Veröffentlichungstag und Bekanntmachung des Hinweises auf die Patenterteilung: **04.04.2012**
(21) Anmeldenummer: 04791088.0
(22) Anmeldetag: 30.10.2004
(51) Int. Cl.: C08G 18/10, C08G 18/08, C08G 18/24, C08G 18/22

(54) **VERFAHREN ZUR HERSTELLUNG VON ISOCYANATGRUPPEN ENTHALTENDEN PREPOLYMEREN**
METHOD FOR THE PRODUCTION OF PREPOLYMERS CONTAINING ISOCYANATE GROUPS
PROCEDE POUR REALISER DES PREPOLYMERES CONTENANT DES GROUPES ISOCYANATE

(30) Priorität: 03.11.2003 DE 10351530
(43) Veröffentlichungstag der Anmeldung: 02.08.2006
(73) Patentinhaber: BASF SE, 67056 Ludwigshafen (DE)
(72) Erfinder: WIND, Michael, 32689 Kalletal (DE); KREYENSCHMIDT, Martin, 49393 Lohne (DE); MURRAR, Imbridt, 01968 Senftenberg (DE); REESE, Hans-Jürgen, 82140 Olching (DE); URTEL, Heiko, 68535 Edingen-Neckarhausen (DE); MALZ, Hauke, 49356 Diepholz (DE)
(86) Internationale Anmeldenummer: PCT/EP2004/012335
(87) Internationale Veröffentlichungsnummer: WO 2005/042604

(56) Entgegenhaltungen:
- EP-A- 1 253 159
- WO-A-03/006521
- DE-A1- 2 612 649
- US-B1- 6 469 121

## Beschreibung

Gegenstand der Erfindung ist ein Verfahren zur Herstellung von Isocyanatgruppen enthaltenden Prepolymeren mit einem geringen Polymerisationsgrad und einer engen Molekulargewichtsverteilung, die einen geringen Gehalt an monomerem Diisocyanat haben.

Prepolymere mit Urethangruppen und endständigen Isocyanatgruppen sind wichtige Zwischenprodukte für die Herstellung von Polyurethanen. Sie sind seit langem bekannt und vielfach in der Literatur beschrieben.

Ihre Herstellung erfolgt durch Umsetzung von Verbindungen mit mindestens zwei mit Isocyanatgruppen reaktiven Wasserstoffatomen, insbesondere Polyolen, mit einem Überschuss an Polyisocyanaten.

Bei der Urethanreaktion des mindestens difunktionellen Isocyanates mit dem mindestens difunktionellen Polyol werden über das stöchiometrische Umsetzungsprodukt hinaus auch oligomere Produkte gebildet, da jedes Zwischenprodukt reaktive NCO- bzw. OH-Gruppen enthält, die ihrerseits mit Edukten bzw. anderen bereits gebildeten Zwischenprodukten weiterreagieren können. Die Bildung solcher oligomeren Polyurethane ist beispielsweise dann unerwünscht, wenn definierte A-B-A-Strukturen aus Isocyanat und Polyol aufgebaut werden sollen. Solche definierten Strukturen wirken sich positiv auf das Eigenschaftsprofil von geschäumten und kompakten Elastomeren, wie thermoplastischen Polyurethanen oder Gießelastomeren, aus. Ferner steigt die Prepolymerviskosität in der Regel mit dem Polymerisationsgrad an. Hochviskose Prepolymere schränken die Weiterverarbeitung vor allem in 2-Komponenten-Systemen in der Regel erheblich ein, da die Mischbarkeit von Isocyanat- und polyolischer Komponente erschwert ist.

Bei der Herstellung der Isocyanatgruppen enthaltenden Prepolymere verbleiben zumeist nicht umgesetzte Monomere des im Überschuss eingesetzten Diisocyanates unabhängig von der Reaktionszeit im Prepolymer. Dieser Restgehalt an monomerem Diisocyanat kann sich störend auswirken bei der Applikation von Isocyanatprepolymeren oder bei ihrer Weiterverarbeitung. So haben einige der Monomere, wie beispielsweise das Toluylendiisocyanat (TDI) oder die aliphatischen Diisocyanate Hexmethylen-1,6-diisocyanat (HDI) und Isophorondiisocyanat (IPDI) einen bereits bei Raumtemperatur merklichen Dampfdruck und wirken daher insbesondere bei Sprühapplikationen durch die dort auftretenden Isocyanatdämpfe toxisch. Bei einer Applikation bei erhöhten Temperaturen, wie sie beispielsweise bei der Verarbeitung von Klebstoffen häufig erforderlich sind, bilden aber auch die Isomere des Diphenylmethandiisocyanats (MDI) aerosol- bzw. gasförmige Emissionen. Da zum Schutz der verarbeitenden Person in der Regel kostenintensive Maßnahmen zur Reinheit insbesondere der Atemluft gesetzlich vorgegeben sind, hat der Anwender ein Interesse an Diisocyanat-freien Prepolymeren. Des weiteren können monomere Diisocyanate an sich oder in Form ihrer aminischen Umsetzungsprodukte mit Feuchtigkeit sogenannte Migrate bilden, die in unerwünschter Weise aus dem fertigen Polyurethanprodukt an dessen Oberfläche und von dort, wie im Falle des Fahrzeuginnenbaus, in die Umgebungsluft oder, wie im Falle von Verpackungsfolien, in das verpackte Produkt wandern. Monomeres MDI neigt darüber hinaus im Prepolymer zur Kristallisation.

Bei üblichen Prepolymeren, die noch signifikante Mengen an monomerem Diisocyanat enthalten, werden die Produkteigenschaften, wie beispielsweise die Viskosität, vorwiegend durch das nicht abreagierte, freie Diisocyanat bestimmt. Erst bei Polyurethanprepolymeren mit einem geringen Gehalt an freiem Diisocyanat, beispielsweise auf Basis von Toluylendiisocyanat (TDI) oder auch von Diphenylmethandiisocyanat (MDI), wie sie aus den genannten Gründen in jüngerer Zeit am Markt verlangt werden, beeinflusst die Bildung oligomerer Produkte in starkem Maße die Produktviskosität und andere polymerphysikalische Kenngrößen des Systems. Die Möglichkeit einer kontrollierten Reaktionsführung zur Steuerung des Polymerisationsgrades wäre insbesondere für letztere Fälle wünschenswert.

Die Produktverteilung im Prepolymer wird maßgeblich durch das molare Verhältnis der Edukte zueinander beeinflusst. So müssen die addierbaren Gruppen möglichst in äquimolaren Mengen vorhanden sein, um hohe Molekulargewichte zu erzielen. Es resultieren breite Molekulargewichtsverteilungen mit geringem Molanteil der einzelnen Fraktionen.

Mit zunehmendem stöchiometrischen Überschuss einer Komponente wird der mittlere Polymerisationsgrad verkleinert und die Bildung höhermolekularer Addukte zurückgedrängt. Die Produktverteilung kann bei der Umsetzung symmetrischer Diisocyanate und Diole mit Hilfe eines statistischen Ansatzes, der sogenannten Flory-Verteilung, berechnet werden. Setzt man beispielsweise ein Mol Diol mit zwei Mol Diisocyanat um, wobei beide Hydroxyl- und Isocyanatgruppen die gleiche Reaktivität haben, (r₀ = 0,5, r₀ ist das molare Verhältnis der von Isocyanat- zu Polyolkomponente), wird das Diurethan lediglich zu 25 % gebildet, während dieses bei einem molaren Überschuss von Diisocyanat:Diol von 5:1 bzw. 7:1 bereits zu 47 % bzw. 58 % entsteht. Für den Grenzfall ro = n_{Diisocyanat}/n_{Diol} « 1 schließlich kann die Ausbeute an 2:1-Addukt aus Isocyanat und Polyol theoretisch nahezu 100 % des molaren Formelumsatzes betragen.

Allerdings muss dann der im Produkt verbliebene hohe molare Überschuss an monomerem Diisocyanat gegebenenfalls wieder aufwendig entfernt werden. Dies kann durch Destillation, Lösungsmittelextraktion oder Filtration erfolgen und ist beispielsweise in WO 01/40342 beschrieben. Daher ist der Einsatz hoher molarer Überschüsse an freiem Isocyanat möglichst zu vermeiden.

Eine weitere Möglichkeit, die Bildung höhermolekularer Addukte bei der Herstellung der Prepolymere zurückzudrängen, ist die Verwendung von Diisocyanaten mit Isocyanatgruppen unterschiedlicher Reaktivität. Gängige, kommerziell erhältliche Beispiele für solche, im folgenden als asymmetrisch bezeichneten Diisocyanate sind 2,4-TDI, 2,4'-MDI oder IPDI. Die resultierende Molekulargewichtsverteilung kann dann allerdings nicht länger durch einen einfachen statistischen Ansatz - wie er oben diskutiert wurde - beschrieben werden. Vielmehr gelingt die Berechnung der einzelnen molaren Produktfraktionen beispielsweise auf der Basis kinetischer Simulationen, in denen die unabhängig experimentell zu bestimmenden, relativen Reaktivitäten der beiden NCO-Gruppen vorgegeben werden.

Bei Einsatz von 2,4-TDI, bei dem der Unterschied in der Reaktivität der beiden Isocyanatgruppen stark ausgeprägt ist, können Diisocyanat-freie Prepolymere mit enger Molgewichtsverteilung bereits bei einem moderaten stöchiometrischem Überschuss der Isocyanatkomponente auch ohne zusätzliche Reinigungsschritte erhalten werden.

Im Falle von 2,4'-MDI, das aufgrund seiner niedrigeren Flüchtigkeit ohnehin schwieriger zu entfernen ist, ist der Reaktivitätsunterschied der Isocyanatgruppen weit weniger stark ausgeprägt. Für 2,4'-MDI können niedrigere Polymerisationsgrade nur durch Einsatz noch immer erheblicher stöchiometrischer Isocyanatüberschüsse realisiert werden, die dann gegebenenfalls wieder aufwendig entfernt werden müssen

Aus dem Stand der Technik sind eine Reihe von Verfahren zur Herstellung von Isocyanatgruppen enthaltenden Prepolymeren mit definiertem Aufbau bekannt, bei denen als Diisocyanate asymmetrische Diisocyanate eingesetzt werden.

So beschreibt DE 102 29 519 A1 ein Verfahren zur Herstellung von Isocyanatgruppen aufweisenden Prepolymeren mit einem geringen Gehalt an monomerem Diisocyanat ohne zusätzlichen Aufarbeitungsschritt, wobei als Diisocyanate asymmetrische Diisocyanate eingesetzt werden. Dabei wird mit einem Verhältnis von NCO-Gruppen zu OH-Gruppen von 1,1 bis 2,0 gearbeitet. Die nach der Lehre von DE 102 29 519 A1 hergestellten MDI-Prepolymere weisen eine vergleichsweise hohe Viskosität auf, was auf einen signifikanten Anteil an hochmolekularen Anteilen im Prepolymer hindeutet.

WO 03/033562 beschreibt Bindemittel für reaktive 1 K-Schmelzklebstoffe oder lösungsmittelhaltige PUR-Klebstoffe auf Basis von 2,4'-MDI und Polyolen mit gegenüber einer entsprechenden 4,4'-MDI-Formulierung verringertem Gehalt an monomerem Diisocyanat und verringerter Viskosität. Auch hier wird mit einem geringen Überschuss an Diisocyanat gearbeitet, was zu einer hohen Viskosität des Produkts führt.

DE 101 57 488 beschreibt die Herstellung von Isocyanatprepolymeren mit einem niedrigen Gehalt an monomerem Polyisocyanat von kleiner 2 Gew.%. Einer der Einsatzstoffe für das Prepolymer ist ein monomerfreies Prepolymer, welches auf der Basis von 4,4'-MDI hergestellt wurde.

Es gibt weiterhin Dokumente, die definierte A-B-A-Strukturen aus Isocyanat und Polyol und Verfahren zu deren Herstellung beschreiben.

So beschreibt EP 1 253 159 die Herstellung von Isocyanatgruppen enthaltenden Prepolymeren mit einem hohen Gehalt an Anteilen mit dem Aufbau ABA, wobei A ein Rest eines Diisocyanats und B der Rest eines Diols ist. Als Diisocyanate werden eine Reihe von üblichen und bekannten Diisocyanaten vorgeschlagen, wobei kein Unterschied zwischen symmetrischen und asymmetrischen Diisocyanaten gemacht wird. Die Herstellung der Prepolymere erfolgt ohne Verwendung von Katalysatoren mit einem sehr hohen äquivalenten Überschuss an Diisocyanaten, im Falle von TDI von 6:1 bis 10:1, der anschließend bei vielen Anwendungsfällen der Prepolymere aufwendig entfernt werden muss.

In WO 01/40340 A2 wird die Herstellung von ABA-Prepolymeren beschrieben, wobei als Isocyanat TDI verwendet wird. Die destillative Entfernung des monomeren Diisocyanatüberschusses erfolgt in Gegenwart mindestens eines inerten Lösungsmittels.

Auch in EP 1 249 460 werden Prepolymere mit A-B-A-Strukturen beschrieben, wobei jedoch der Gehalt an 2,4'-MDI im eingesetzten Diisocyanat maximal 70 % beträgt.

EP 0 370 408 schließlich beschreibt Prepolymere mit einem Anteil von mindestens 85% perfekter A-B-A, wobei als Isocyanatkomponente A jedoch alkysubstituierte TDI-Derivate eingesetzt werden.

In WO 03/46040 werden monomerarme, Isocyanatgruppen enthaltende Prepolymere beschrieben, die durch Umsetzung von sowohl symmetrischen als auch asymmetrischen Diisocyanaten mit Diolen hergestellt werden. Hierbei können bei der Herstellung übliche Katalysatoren, wie Amine oder metallorganische Katalysatoren, verwendet werden.

In DE 101 61 386 werden monomerarme Prepolymere auf der Basis von IPDI und Polyolen, die mittels DMC-Katalyse hergestellt wurden, beschrieben. Es erfolgt keine Entmonomerisierung der Prepolymere, der Gehalt an freiem IPDI ist mit fast 2 Gew.-% sehr hoch.

Aufgabe der Erfindung war es, ein Verfahren zur Herstellung von Isocyanatgruppen enthaltenden Prepolymeren zu entwickeln, die einen geringen Anteil an monomerem Diisocyanat, vorzugsweise kleiner 0,1 Gew.-% und insbesondere kleiner 0,05 Gew.-%, einen geringen Polymerisiationsgrad und eine enge Molgewichtsverteilung aufweisen.

Die Aufgabe konnte gelöst werden, indem als Diisocyanate asymmetrische Diisocyanate, insbesondere 2,4-TDI, 2,4'-MDI und/oder IPDI eingesetzt werden, die Umsetzung in Anwesenheit von metallorganischen Verbindungen der Metalle aus den Gruppen IV A (Ge, Sn, Pb), IV B (Ti, Zr, Hf), V A (Sb, Bi), V B (V, Nb, Ta), VIII B (Fe, Co, Ni, Ru) als Katalysatoren erfolgt, diese metallorganischen Katalysatoren dann aus dem Reaktionsprodukt entfernt bzw. mit Verbindungen, ausgewählt aus der Gruppe, bestehend aus β-Hydroxycarbonsäuren, der β-Aminocarbonsäuren, der β-Ketocarbonsäuren, Ester der β-Hydroxycarbonsäuren, Ester der β-Aminocarbonsäuren, Ester der β-Ketocarbonsäuren, Ester der 1,3-Dicarbonsäuren, 1,3 Diketone, β-Hydroxyketone, 1,3-Diole, β-Aminoalkohole, Hydrazinderivate des Salicylaldehyds und Triazolderivate des Salicylaldehyds oder Mischungen davon deaktiviert werden und überschüssiges monomeres Diisocyanat im Anschluss vom Reaktionsprodukt abgetrennt wird.

Gegenstand der Erfindung ist demzufolge im wesentlichen ein Verfahren zur Herstellung von Isocyanatgruppen enthaltenden Prepolymeren durch Umsetzung von
a) Diisocyanaten mit
b) Verbindungen mit mindestens zwei mit Isocyanatgruppen reaktiven Wasserstoffatomen in Gegenwart
c) von Katalysatoren, und nachfolgende Abtrennung der überschüssigen monomeren Diisocyanate,
dadurch gekennzeichnet, dass
als Diisocyanate a) asymmetrische Diisocyanate und als Katalysatoren c) metallorganischen Verbindungen der Metalle aus den Gruppen IV A (Ge, Sn, Pb), IV B (Ti, Zr, Hf), V A (Sb, Bi), V B (V, Nb, Ta), VIII B (Fe, Co, Ni, Ru) als Katalysatoren eingesetzt werden und diese metallorganischen Katalysatoren vor der Abtrennung der monomeren Diisocyanate entfernt oder mit Verbindungen, ausgewählt aus der Gruppe, bestehend aus β-Hydroxycarbonsäuren, der β-Aminocarbonsäuren, der β-Ketocarbonsäuren, Ester der β-Hydroxycarbonsäuren, Ester der β-Aminocarbonsäuren, Ester der β-Ketocarbonsäuren, Ester der 1,3-Dicarbonsäuren, 1,3 Diketone, β-Hydroxyketone, 1,3-Diole, β-Aminoalkohole, Hydrazinderivate des Salicylaldehyds und Triazolderivate des Salicylaldehyds oder Mischungen davon deaktiviert werden.

Die Entfernung der Katalysatoren kann durch Filtration erfolgen.

Bei den Katalysatoren kann es sich um homogene Katalysatoren, heterogene Katalysatoren oder geträgerte Katalysatoren handeln. Bei den geträgerten Katalysatoren werden die homogenen Katalysatoren auf einen Träger aufgebracht. Die Katalysatoren werden unten näher beschrieben.

Unter asymmetrischen Diisocyanaten werden solche verstanden, deren Isocyanatgruppen eine unterschiedliche Reaktivität aufweisen. Vorzugsweise verwendet werden als asymmetrische Diisocyanate 2,4-TDI, 2,4'-MDI und/oder isophorondiisocyanat (IPDI). Besonders bevorzugt ist 2,4'-MDI. Asymmetrische Diisocyanate können auch im Gemisch mit symmetrischen Diisocyanaten oder polymeren Isocyanaten eingesetzt werden, wobei der Anteil der asymmetrischen Diisocyanate im Gemisch größer als 30 Gew.-%, bevorzugt größer als 60 Gew.-% und insbesondere bevorzugt größer als 90 Gew.-% ist.

Es wurde gefunden, dass der Einsatz von metallorganischen Verbindungen als Katalysator zu Isocyanatprepolymeren mit geringem Polymerisationsgrad führt. Als erfindungsgemäß einsetzbare Katalysatoren eignen sich metallorganische Verbindungen der Metalle aus den Gruppen IVA (Ge, Sn, Pb), VA (Sb, Bi), IVB (Ti, Zr, Hf), VB (V, Nb, Ta) oder VIIIB (insbesondere Fe, Co, Ni, Ru). Als Liganden eignen sich beispielsweise Carbonsäureanionen, Alkoholate, Enolate, Thiolate, Mercaptide sowie Alkylliganden. Diese Liganden können auch in Form von chelatisierenden Systemen eingesetzt werden. Exemplarisch seien die Komplexe Bismut(III)-tris(2-ethylhexanoat), Eisen(III)acetat oder Zirkonium(IV)propylat genannt. Besonders bevorzugte Katalysatoren im Rahmen der Erfindung sind metallorganische Verbindungen aus der Gruppe der Zinn(IV)-Verbindungen. Diese Katalysatoren zeigen eine besonders hohe Selektivität bezüglich der Umsetzung der reaktiveren Isocyanatgruppe, insbesondere bei Verwendung von 2,4'-MDI als Diisocyanat. Konkrete Verbindungen sind: Dimethyl-, Dibutyl- und Dioctyl-zinndilaurat, -bis(dodecylmercaptid), -Zinn-bis(2-ethylhexylthioglycolat), -Zinn -diacetat, -Zinn -maleat, -Zinn -bisthioglycerol; Octyl-zinntris(2-ethyl-hexylthioglycolat) und Bis(U-methoxycabonyl-ethyl)zinndilaurat. Bevorzugt sind weiterhin metallorganische Ti(IV)-Katalysatoren. Als Ti(IV)-Verbindungen seien ausdrücklich genannt: Tetraisopropyltitan, Tetra-tert-butylorthotitan, Tetra(2-ethylhexyl)-titan und Titan-bis(ethylacetoacetato)diisopropoxid. Ferner erweisen sich Bismut-organische Verbindungen, insbesondere in Form ihrer Carboxylate, als brauchbar. Es seien exemplarisch Bismut(III)-tris(2-ethylhexanoat) und -laurat genannt. Es können auch Mischungen von Metallkatalysatoren, insbesondere von den genannten, eingesetzt werden.

Die erfindungsgemäß eingesetzten metallorganischen Katalysatoren werden vorzugsweise in einer Menge im Bereich zwischen 0,1 und 5000 ppm, bevorzugt zwischen 1 und 200 ppm und insbesondere bevorzugt zwischen 1 und 30 ppm bezogen auf den Reaktionsansatz, eingesetzt. Bei niedrigen Konzentrationen ist die Wirkung der Katalysatoren nur schwach ausgeprägt. Zu hohe Katalysatorkonzentrationen führen verstärkt zur Bildung unerwünschter Nebenprodukte wie Allophanaten, Isocyanatdi- bzw. -trimeren oder Harnstoffen. Im Einzelfall kann die optimale Menge an Katalysator durch wenige orientierende Versuche leicht ermittelt werden.

Da metallorganische Katalysatoren bei der Abtrennung des monomeren Diisocyanates, insbesondere durch Destillation, störend wirken können, ist es erforderlich, diese im Anschluss an die Prepolymersynthese zu deaktivieren oder abzutrennen. Unter der erhöhten thermischen Belastung der Destillation können Katalysatoren auch die Urethanspaltung katalysieren, was zu einer unerwünschten Erhöhung des Polymerisationsgrades führen kann.

In der Vergangenheit wurden die positiven Effekte, die aus dem Einsatz der genannten Katalysatoren herrühren, bei der Herstellung von monomerarmen Isocyanatgruppen enthaltenden Prepolymeren nicht genutzt, da es bei der Abtrennung der überschüssigen Monomeren zu einem Abbau der Prepolymeren kam. Daher wurde zumeist auf den Einsatz von Katalysatoren verzichtet.

Die destillative Abtrennung von überschüssigem monomerem Diisocyanat erfolgt bevorzugt in Gegenwart eines Blockierungsmittels für den metallorganischen Katalysator. Solche Blockierungsmittel sind in der Regel Metalldeaktivatoren und wirken durch Komplexierung des metallischen Zentralatoms des metallorganischen Katalysators. Beispiele für solche Lewis-sauren Metalldeaktivatoren sind 2-(2-Benzimidazolyl)-phenol, 3-(2-Imidazolin-2-yl)-2-naphthol, 2-(2-Benzoxazolyl)-phenol, 4-Diethylamino-2,2'-dioxy-5-methylazobenzol, 3-Methyl-4-(2-oxy-5-methylphenylazo)-1-phenyl-5-pyrazolon, Tris(2-tert-butyl-4-thio(2'methyl-4'hydroxy-5'tert-butyl)-phenyl-5-methyl)phenyl-phosphit, Decamethylendicarboxy-disalicyloylhydrazid, 3-Salicyloylamino-1,2,4-triazol, 2',3-Bis-((3-(3,5-di-tert-butyl-4-hydroxyphenyl)propionyl))propionhydrazid und 2,2'-Ox-amido-bis-(ethyl-3-(3,5-de-tert-butyl-4-hydroxy-phenyl)propionat).

Als besonders geeignete Verbindungen zur Deaktivierung der Metallorganischen Verbindungen haben sich bezogen auf das Kohlenstoffatom (C1) der Säuregruppe (-C(1)OOH) am β-Kohlenstoffatom (C3) funktionalisierte organische Carbonsäuren und insbesondere deren Ester aus der Gruppe der β-Hydroxycarbonsäuren, der β-Aminocarbonsäuren, der β-Ketocarbonsäuren sowie der 1,3-Dicarbonsäuren erwiesen. Als konkrete Verbindungen seien genannt Citronensäure, Äpfelsäure, Weinsäure, Acetessigsäure, 2-Chloracetessigsäure, Benzoylessigsäure, Acetondicarbonsäure, Dehydracetsäure, 3-Oxovaleriansäure und Malonsäure sowie die jeweils zugehörigen Ester, beispielsweise in Form ihrer Methyl- oder Ethylester.

In einer besonders bevorzugten Ausführungsform der Erfindung werden solche Ester als Metalldeaktivatoren eingesetzt, in denen R₁ bzw. R₄ hydroxyterminierte alkylische Reste mit einem mittleren Molekulargewicht M_{w} von 170 bis 10000 g mol⁻¹, insbesondere von 170 bis 450 g mol⁻¹ sind. Die Darstellung dieser polymeren Blockierungsverbindungen erfolgt durch Veresterung der reinen Carbonsäuren oder durch Umesterung beispielsweise von Methyl- und Ethylestern mit Polyolen mit einem mittleren Molekulargewicht M_{w} von 170 bis 10000 g mol⁻¹, insbesondere von 170 bis 450 g mol⁻¹, und einer Funktionalität zwischen 1 und 4, insbesondere von 1,7 bis 2,5. Bei den genannten Polyolen handelt es sich zumeist um Anlagerungsprodukte von niederen Alkylenoxiden, insbesondere Ethylenoxid und/oder Propylenoxid, an H-funktionelle Startsubstanzen.

Diese polymeren Metalldeaktivatoren sind deshalb für das erfindungsgemäße Verfahren besonders geeignet, weil sie unter der thermischen Belastung der destillativen Entfernung des monomeren Diisocyanates nicht bzw. nur gering flüchtig sind und daher den metallorganischen Katalysator bis zum Ende der Destillation wirksam komplexieren können. Es sind solche Blockierungsmittel besonders geeignet, deren Siedepunkt bei gleichem Druck höher ist als derjenige der Isomeren des MDI, deren Siedepunkt also bei 0,1 bar höher ist als 250°C.

Der Metalldeaktivator wird dem Isocyanatprepolymer vorzugsweise direkt im Anschluss an dessen Synthese in einem 10 bis 10000 fachen, vorzugsweise in einem 10- bis 50fachen molaren Überschuss, bezogen auf die eingesetzte Menge des genutzten Metallkatalysators zugesetzt.

Als brauchbar haben sich ferner Verbindungen aus den Gruppen der 1,3-Diketone, β-Hydroxyketone, 1,3-Diole und β-Aminoalkohole erwiesen.

In einer besonderen Ausführungsform der Erfindung werden als Metalldeaktivatoren Hydrazinderivate des Salicylaldehyds genutzt, wie beispielsweise Decamethylendicarboxy-disalicyloylhydrazid und 3-Salcyloylamino-1,2,4-triazol.

Überraschenderweise hat sich gezeigt, dass besonders gute Ergebnisse mit Metalldeaktivatoren erreicht werden, die Triazol-und Hydrazinderivate des Salicylaldehyds sind.

Beispiele für derartige Strukturen sind Decamethylendicarboxy-disalicyloylhydrazide (ADK Stab CDA 6^{®}) und 3-Salicyloylamino-1,2,4-triazol (ADK Stab CDA 1^{®}). Besonders bevorzugt sind Decamethylendicarboxy-disalicyloylhydrazide. Es kann von Vorteil sein, nicht einen einzelnen Metalldeaktivator einzusetzen, sondern Mischungen von Metalldeaktivatoren. Bevorzugt sind dabei solche Mischungen, die Salicyloylamino-1,2,4-triazol und/oder Decamethylendicarboxy-disalicyloylhydrazide enthalten, insbesondere solche Mischungen, die Decamethylendicarboxy-disalicyloylhydrazide enthalten.

In einer besonderen Ausführungsform der Erfindung werden metallorganische Katalysatoren eingesetzt, die auf einem Trägermaterial aufgebracht sind. Diese werden in der Folge als geträgerte Katalysatoren bezeichnet. Der geträgerte Katalysator kann durch Filtration im Anschluss an die Prepolymersynthese einfach vom Isocyanatprepolymer abgetrennt werden.

Im Rahmen dieser Erfindung sind im allgemeinen poröse Trägermaterialien, welche aus der Gruppe der organischen oder anorganischen Materialien wie auch die der anorganischen Oxide stammen können, geeignet. Bevorzugte Trägermaterialien sind Kohlenstoffmaterialien (z.B. Aktivkohlen oder Ruße), Siliciumcarbid, Aluminiumoxid, Zirkoniumdioxid, Siliciumdioxid, Titandioxid, Zeolithe, Vanadiumoxid, Wolframoxid, Erdalkali-Oxide bzw. Carbonate, Eisenoxid, Zinkoxid, Magnesiumoxid, Aluminiumphosphate, Titansilicate, Mischoxide, Talk, Ton sowie Mischungen derselben. Als Trägermaterialien weiterhin verwendet werden können festes Paraffin und Polymere des Vinylchlorids, Ethylens, Propylens, Styrols, der Acrylate, substituierte Derivate der genannten Polymere und Copolymere derselben.

Im Rahmen dieser Erfindung haben sich insbesondere poröse Kohlenstoffträger als geeignet erwiesen, welche aus einer Vielzahl kommerzieller Anbieter bezogen werden können. Die erfindungsgemäß verwendeten Kohlenstoffträger haben eine spezifische Oberfläche von 0,5 bis etwa 3000 m²/g (Bestimmung nach DIN 66131), ein Porenvolumen im Bereich von 0,01 ml/g bis 2 ml/g (Bestimmung nach DIN 66 134 und DIN 66 135). Bevorzugt werden poröse Kohlenstoffträger mit einer spezifischen Oberfläche von 1 bis 1000 m²/g. Insbesondere werden Kohlenstoffträger mit einer spezifischen Oberfläche von 5 bis 500 m²/g bevorzugt.

Optional können die Kohlenstoffträger vor Aufbringen der katalytisch aktiven Verbindung durch die gängigen Methoden vorbehandelt werden, wie Säureaktivierung, beispielsweise mit Salpetersäure, Phosphorsäure oder Ameisensäure, Kalzinierung oder Imprägnierung, beispielsweise mit Alkalisalzen.

Das Aufbringen eines Katalysators auf das Trägermaterial wird nach dem Stand der Technik durchgeführt. Auf den Träger werden zwischen 0.5 und 40 Gew.-% des Metalls, bezogen auf Gesamtgewicht des Katalysators, aufgebracht. Besonders bevorzugt enthalten die geträgerten Katalysatoren zwischen 1 und 20 Gew.-% des Metalls.

Bei einer möglichen Herstellungsmethode der geträgerten Katalysatoren wird zunächst eine Lösung mit der gewünschten Menge der metallorganischen Verbindung bereitet, in die dann das Trägermaterial gegeben wird. Durch Verdampfen des Lösungsmittels erhält man einen heterogenen Katalysator mit der entsprechenden Menge an Aktivmasse auf dem Trägermaterial. So kann beispielsweise ein Kohlenstoffträger unter Rühren in eine Lösung von Dibutylzinndilaurat in Ethanol eingebracht und durch Verdampfen des Ethanols und anschließende Trocknung der Katalysator erhalten werden.

Die geträgerten Katalysatoren werden in einer Konzentration von 0,001 bis 5 Gew.-%, insbesondere von 0,01 bis 0,1 Gew.%, und besonders bevorzugt zwischen 0,1 und 0,5 Gew.-% bezogen auf den Reaktionsansatz, eingesetzt.

Eine weitere Möglichkeit, die metallorganischen Katalysatoren auf dem Träger zu fixieren, besteht in der chemischen Verankerung auf einem Merrifield-Harz. Auch können metallorganische Komplexe eingesetzt werden, die einen ungesättigten Kohlenstoffliganden besitzen, der durch Polymerisation zu einem leicht filtrierbaren Katalysator führt. Geeignet ist z. B. eine Verbindung der Art Sn((CH₂)₃CHCH₂)(R)₂R' mit R, R' = Alkyl, Aryl, Alkoxy).

In einer weiteren besonderen Ausführungsform der Erfindung werden die homogenen Katalysatoren durch Adsorptionsmaterialien aus dem reaktiven Isocyanatprepolymer entfernt. Für die Adsorption sind die gleichen Materialien geeignet, die auch für die Trägerung der metallorganischen Katalysatoren genannt wurden.

In einer weiteren Ausführungsform der Erfindung können die beschriebenen, verschiedenen Methoden der Deaktivierung des metallorganischen Katalysators, d.h. die Deaktivierung durch Blockierungsmittel, die Trägerung homogener Katalysatoren bzw. der Einsatz Lewis-saurer Katalysatoren mit anschließender Filtration oder die Adsorption des Metallkatalysators auch beliebig kombiniert werden.

Es ist überraschend, dass durch den Einsatz der erfindungsgemäß verwendeten metallorganischen Katalysatoren und deren nachfolgende Entfernung oder Umwandlung die Aufgabe der Erfindung gelöst werden konnte. Dies gilt umso mehr, als bei Verwendung von üblichen aminischen Katalysatoren die Selektivität der beiden Isocyanatgruppen der asymmetrischen Diisocyanate deutlich verschlechtert wird und in vielen Fällen geringer ist als bei der Umsetzung ohne Katalysatoren.

Als Verbindungen mit mindestens zwei mit Isocyanatgruppen reaktiven Wasserstoffatomen zur Herstellung der Prepolymere können vorzugsweise solche eingesetzt werden, die mindestens zwei Hydroxyl- und/oder Aminogruppen im Molekül aufweisen. Insbesondere weisen diese Verbindungen ein Molekulargewicht Mn zwischen 60 und 10000 g/mol auf. Besonders bevorzugt werden die Verbindungen mit mindestens zwei mit Isocyanatgruppen reaktiven Wasserstoffatomen ausgewählt aus der Gruppe, enthaltend mehrwertige Alkohole, Polyetheralkohole, Polyesteralkohole, Polyetherpolyamine, hydroxylgruppenhaltige Polycarbonate, hydroxylgruppenhaltige Polyacetale und beliebige Mischungen aus mindestens zwei dieser Verbindungen. Besonders bevorzugt sind mehrwertige Alkohole und Polyetheralkohole sowie Mischungen daraus.

Beispiele für mehrwertige Alkohole sind Alkandiole mit 2 bis 10, vorzugsweise 2 bis 6 Kohlenstoffatomen sowie höhere Alkohole, wie Glycerin, Trimethylolpropan oder Pentaerythrit. Weiterhin können natürliche Polyole, wie Rizinusöl, eingesetzt werden.

Die Polyetheralkohole weisen vorzugsweise eine Funktionalität im Bereich von 2 bis 8 auf. Ihre Herstellung erfolgt üblicherweise durch Anlagerung von Alkylenoxiden, insbesondere Ethylenoxid und/oder Propylenoxid, an H-funktionelle Startsubstanzen. Die Alkylenoxide können dabei einzeln, nacheinander oder als Mischung eingesetzt werden. Als Startsubstanzen kommen beispielsweise Wasser, Diole, Triole, höherfunktionelle Alkohole, Zuckeralkohole, aliphatische oder aromatische Amine oder Aminoalkohole in Betracht.

Besonders geeignet sind Polyetheralkohole mit einem mittleren Molekulargewicht zwischen 500 und 3000 g/mol und einer mittleren OH-Funktionalität von 2 bis 3. Besonders bevorzugte Startsubstanzen zur Herstellung dieser Polyetheralkohole sind Propylenglykol und Glyzerin. Bevorzugte Alkylenoxide sind Ethylenoxid und Propylenoxid.

Ebenfalls bevorzugt sind Polyesteralkohole mit einem mittleren Molekulargewicht zwischen 1000 und 3000 g/mol, einer mittleren OH-Funktionalität von 2 bis 2,6. Besonders bevorzugt sind Polyesteralkohole auf Basis von Adipinsäure.

Die Herstellung der Prepolymere erfolgt, wie dargelegt, durch Umsetzung der Polyisocyanate mit den Verbindungen mit mindestens zwei mit Isocyanatgruppen reaktiven Wasserstoffatomen.

Die Umsetzung der Diisocyanate mit den Verbindungen mit mindestens zwei mit Isocyanatgruppen reaktiven Wasserstoffatomen kann kontinuierlich oder diskontinuierlich in üblichen Reaktoren, beispielsweise bekannten Rohr- oder Rührkesselreaktoren, gegebenenfalls in Anwesenheit von inerten Lösungsmitteln, d.h. gegenüber den Isocyanaten und OH-funktionellen Verbindungen nicht reaktiven Verbindungen, erfolgen.

In Gegenwart von inerten Lösungsmitteln wird die Selektivität der Urethanreaktion asymmetrischer Isocyanate weiter erhöht. Beispiele für inerte Lösungsmittel sind Aceton, Dichlormethan, Ethylacetat oder Toluol. Die Reaktion kann in Gegenwart inerter Lösungsmittel bei tieferen Temperaturen durchgeführt werden. Die Umsetzung erfolgt in der Regel in einem Temperaturbereich zwischen 0 und 100°C, insbesondere zwischen 20 und 40°C. Der Massenanteil an Lösungsmittel am Gesamtansatz beträgt 5 bis 60 Gew.%, insbesondere 20 bis 50 Gew.-%.

Um einen möglichst hohen Anteil an Oligomeren mit einer Diisocyanateinheit an jeder Hydroxylgruppe zu erhalten, ist es vorteilhaft, mit einem Überschuss an Diisocyanat zu arbeiten. Das Verhältnis von Isocyanatgruppen zu mit Isocyanatgruppen reaktiven Gruppen liegt in der Regel im Bereich zwischen 1:1 und 10:1, bevorzugt zwischen 1:1 und 7:1 und insbesondere bevorzugt zwischen 1:1 und 5:1. Allgemein werden bei einem gegebenen Diisocyanatüberschuss, also auch bei moderaten Überschüssen im Bereich von 1:1 bis 1:3, bei erfindungsgemäßer Durchführung der Synthese reaktiver Isocyanate Produkte mit niedrigerem Polymerisationsgrad und engerer Molekulargewichtsverteilung erhalten als bei Verfahren nach dem Stand der Technik.

Da, wie eingangs ausgeführt, der Anteil an monomeren Diisocyanaten im Prepolymeren gering sein sollte, muss das nicht umgesetzte Diisocyanat nach der Umsetzung aus dem Prepolymeren entfernt werden. Dies kann auf üblichem Wege geschehen, beispielsweise durch Destillation, vorzugsweise Dünnschichtdestillation, oder besonders bevorzugt durch Verwendung mindestens eines Kurzwegverdampfers, wie beispielsweise in WO 03/46040 beschrieben.

Da bei dem erfindungsgemäßen Verfahren mit einem geringeren Überschuss an Diisocyanat gearbeitet werden kann, ist auch die Menge des zu entfernenden Diisocyanats geringer als bei Verfahren des Standes der Technik. An monomerem Diisocyanat freie Prepolymere mit gegebenem Polymerisationsgrad und gegebener Molekulargewichtverteilung und damit beispielsweise gegebener Viskosität können so, bezogen auf die Prepolymersynthese, mit höherer Ausbeute und, bezogen auf die Entfernung des überschüssigen monomeren Diisocyanates, mit erhöhtem Durchsatz, d.h. insgesamt mit verbesserter Wirtschaftlichkeit im Vergleich zu Verfahren des Standes der Technik hergestellt werden.

Das so erhaltene reaktive Isocyanatprepolymer enthält vorzugsweise 0,01 bis 0,5 Gew.-%, bevorzugt 0,02 bis 0,09 Gew.-% monomeres Diisocyanat. Der NCO-Gehalt der erfindungsgemäßen reaktiven Isocyanatprepolymere beträgt 3 bis 14 Gew.%, insbesondere 5 bis 9 Gew.%. Die Viskosität der erfindungsgemäßen reaktiven Isocyanatprepolymere beträgt, gemessen nach Brockfield (ISO 255), bei 50°C 100 mPas bis 100000 mPas, bevorzugt 1000 mPas bis 40000 mPas.

Die erfindungsgemäßen Prepolymere zeichnen sich weiterhin durch eine enge Molgewichtsverteilung, einen niedrigen Polymerisationsgrad und einen Gehalt an ABA Strukturen von mindestens 80 Flächen-%, bezogen auf das Prepolymere, aus. Die Flächen-% wurden mittels Gelpermeationschromatographie (GPC) bestimmt.

Die erfindungsgemäßen Isocyanatgruppen und Urethangruppen enthaltenden Prepolymere werden üblicherweise zur Herstellung von Polyurethanen eingesetzt. Dazu werden die Isocyanatgruppen und Urethangruppen enthaltenden Prepolymere mit Verbindungen, die mit Isocyanatgruppen reagieren können, umgesetzt. Bei den Verbindungen, die mit Isocyanatgruppen reagieren können, handelt es sich beispielsweise um Wasser, Alkohole, Amine oder Verbindungen mit Mercaptogruppen. Die Polyurethane können Schaumstoffe, insbesondere Montageschäume, Beschichtungen, Klebstoffe, insbesondere Schmelzklebstoffe, Anstrichstoffe sowie kompakte oder zellige Elastomere sein. Bei der Anwendung als Dicht- oder Klebstoffe erfolgt das Aushärten zum fertigen Polyurethan im einfachsten Fall durch Einwirkung von Luftfeuchtigkeit.

Die erfindungsgemäßen Prepolymere können vorzugsweise auch zur Herstellung von Polyurethan-Folien, insbesondere solchen für den Lebensmittelbereich, eingesetzt werden. Hierfür, ebenso wie für den Einsatz als Schmelzklebstoffe, insbesondere Heißschmelzklebstoffe, Beschichtungen oder Dichtungen sind Prepolymere auf Basis von 2,4'-MDI besonders geeignet.

Die Erfindung soll in nachfolgenden Ausführungsbeispielen näher erläutert werden.

Es soll ein Isocyanatendgruppen aufweisendes, Diisocyanat-freies Produkt, welches hauptsächlich aus Oligomeren bestehend aus zwei Mol Diphenylmethandiisocyanat (2,4'-Isomeres) und einem Mol eines Polypropylenglykols mit einem mittleren Molekulargewicht von M_{w} = 450 g mol⁻¹ (PPG 450) aufgebaut ist, hergestellt werden.

### Vergleichsbeispiel 1: Kein Einsatz von Katalysatoren

Zur Herstellung der katalysatorfreien Referenzsysteme wurde 1 mol Polypropylenglykol mit einem Molekulargewicht von 450 g/mol (PPG 450) tropfenweise und unter Rühren zu einem molaren Überschuss des Diphenylmethandiisocyanats (2,4'-Isomeres) gegeben (Tabelle 1), welches in einem Laborreaktor bei 60°C vorgelegt war, und zur Reaktion gebracht. Nach vollständiger Zugabe wurde das Reaktionsgemisch drei Stunden bei 60°C gehalten.

In einem Kurzwegverdampfer wurde das überschüssige Diphenylmethandiisocyanat entfernt, und man erhielt ein monomerfreies Produkt mit einem Restgehalt an freiem Diisocyanat kleiner 0,1 Gew.-% und einem Isocyanatgehalt von ca. 8,8 Gew.-% NCO.

Restmonomergehalt und Molekulargewichtsverteilung wurden mittels GPC-Analyse bestimmt.

**Tabelle 1: Produktverteilung der unkatalysierten Prepolymerreaktion mittels GPC-Analyse nach Entfernung des monomeren Isocyanats (Angabe der Flächenprozente). Alle prozentualen Angaben beziehen sich auf die Gesamtmenge oligomerer 2:1-, 3:2- und höherer Isocyanat:Polyol-Addukte.**

| Molares Edukt-Verhältnis n_{MDI}:n_{PPG450} | Eduktmasse m_{PPG450} [g] | Eduktmasse m_{2,4'-MDI} [g] | Viskosität bei 50°C [Pas] | Molekulargewichtsverteilung Produkt (GPC) [%] | | |
|---|---|---|---|---|---|---|
| | | | | Diurethan (2:1-Addukt; MDI-PPG450-MDI) | Triurethan (3:2) | > 3:2 |
| 3:1 | 375,0 | 625,0 | 35 | 62,8 | 25,2 | 12,0 |
| 5:1 | 264,7 | 735,3 | 29 | 80,8 | 15,5 | 3,6 |
| 7:1 | 204,7 | 795,3 | 18 | 84,4 | 13,0 | 2,6 |

### Beispiel 1: Erfindungsgemäß

### Herstellung des Blockierungsmittels

In einen Vierhalsrundkolben mit nachgeschalteter Destillationsbrücke Kühlfalle, wurden 50,72 g Pluriol® E 200 (BASF Aktiengesellschaft, Deutschland) (OHZ:553 mg KOH/g, MW: 202,89 g/mol) und 69,67 g Methylacetoacetat (MW: 116,12 g/mol) eingewogen und auf 140°C aufgeheizt. Während der Umsetzung wurde ein leichter Stickstoffstrom durch den Kolben eingeleitet, um das entstehende Methanol zu entfernen. Nach 7 Stunden Reaktionszeit wurde die Reaktion abgebrochen. Das Umsetzungsprodukt wurde mittels GPC nachgewiesen. Das Produkt war gelb-orange.

Es wurde verfahren wie in Vergleichsbeispiel 1, jedoch wurden jeweils 0,002 Gew.-% Dibutylzinndilaurat (DBTL), bezogen auf die Gesamtansatzmenge an Polyol- und Isocyanatkomponente, dem PPG 450 zugesetzt.

Die Destillation wurde in Gegenwart von 2000 ppm, bezogen auf den Gesamtansatz, des Blockierungsmittels Acetessigsäure(hydroxyalkyl)ester durchgeführt.

**Tabelle 2: Produktverteilung der mit 20 ppm DBTL katalysierten Prepolymerreaktion (s. Vergleichsbeispiel 1) mittels GPC-Analyse nach Entfernung des monomeren Isocyanats (Angabe der Flächenprozente).**

| Molares Edukt-Verhältnis n_{MDI}:n_{PPG450} ^{.} | Eduktmasse m_{PPG450} [g] | Eduktmasse m_{2,4'-MDI} [g] | Viskosität bei 50°C [Pas] | Molekulargewichtsverteilung Produkt (GPC) [%] | | |
|---|---|---|---|---|---|---|
| | | | | Diurethan (2:1-Addukt; MDI-PPG450-MDI) | Triurethan (3:2) | > 3:2 |
| 3:1 | 375,0 | 625,0 | 23 | 84,4 | 13,7 | 1,9 |
| 5:1 | 264,7 | 735,3 | 17 | 92,2 | 7,8 | < 0,5 |
| 7:1 | 204,7 | 795,3 | 17 | 94,3 | 5,7 | < 0,5 |

### Beispiel 2: Erfindungsgemäß - in Gegenwart verschiedener Konzentrationen an Dibutylzinndilaurat

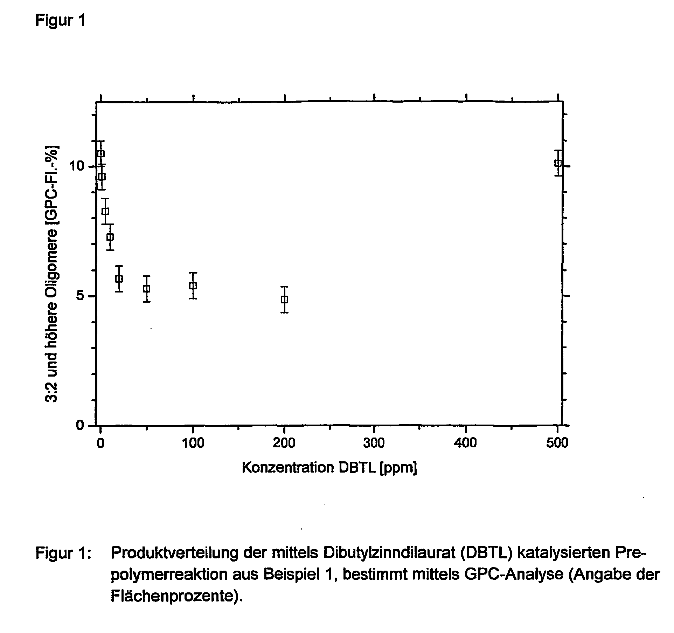

Es wurde verfahren wie in Beispiel 1, jedoch wurden bei einem festen molaren 2,4'-MDI:PPG450-Verhäftnis von 7:1 variable Konzentrationen an Dibutylzinndilaurat (DBTL), bezogen auf die Gesamtansatzmenge an Polyol- und Isocyanatkomponente, dem PPG 450 zugesetzt. Die Bildung von Triurethan, dem 3:2-Addukt aus MDI und Polyol, und höhermolekularen Oligomeren ist in einem Konzentrationsbereich von 20 bis 200 ppm DBTL, bezogen auf die Gesamtansatzmenge an Polyol- und Isocyanatkomponente, deutlich zurückgedrängt. Die Werte sind in Bild 1 festgehalten.

### Beispiel 3: Erfindungsgemäß - in Gegenwart verschiedener metallorganischer Katalysatoren

Es wurde verfahren wie in Beispiel 1, jedoch wurden bei einem festen molaren 2,4'-MDI:PPG450-Verhältnis von 7:1 0,002 Gew.-% verschiedener Katalysatoren, bezogen auf die Gesamtansatzmenge an Polyol- und Isocyanatkomponente, dem PPG 450 zugesetzt (Tabelle 3). Einige Zinn- und Titankatalysatoren senken den Polymerisationsgrad 1 (Anteil 2:1-Addukt ≥ 92 % (GPC)) im Vergleich zu Vergleichsbeispiel, andere haben keinen Einfluss auf die Produktverteilung (Anteil 2:1-Addukt = 90 ± 2 % (GPC)), während einige auch die Bildung oligomerer Produkte begünstigen.

**Tabelle 3: Produktverteilung der mit 20 ppm metallorganischem Katalysator katalysierten Prepolymerreaktion (s. Vergleichsbeispiel 1) mittels GPC-Analyse (Angabe der Flächenprozente).**

| Katalysator | Molekulargewichtsverteilung Produkt (GPC) [%] | |
|---|---|---|
| | Diurethan (2:1-Addukt; MDI-PPG450-MDI | Triurethan (3:2) und Höhere Homologe (> 3:2) |
| Dimethylzinndilaurat | 95,1 | 4,9 |
| Dibutylzinndilaurat | 94,3 | 5,7 |
| Dimethylbis(dodecylmercaptid) | 95,9 | 4,1 |
| Dibutyll-bis(dodecylmercaptid) | 94,5/94,0 | 5,5/6,0 |
| Dioctylbis(dodecylmercaptid) | 95,2/93,6 | 4,8/6,4 |
| Tetra-tert-butylorthotitanat | 92,7 | 7,3 |
| Titan(IV)bis(ethylacetoacetato)-diisopropoxid | 92,5 | 7,5 |
| Tetra(2-ethylhexyl)-titanium | 92,3 | 7,7 |
| Bismut(III)-tris(2-ethylhexanoat) | 90,4 | 9,6 |
| Eisen(III)-acetylacetonat | 88,2 | 11,8 |
| Nickel(II)-acetylacetonat | 89,6 | 10,4 |
| Vanadium(III)-acetylacetonat | 89,9 | 10,1 |
| Zinn(II)-isooctoat | 88,5 | 11,5 |
| Zirkonium(III)-propylat | 81,0 | 19,0 |

### Beispiel 4: Erfindungsgemäß - In Gegenwart eines heterogenen Katalysators

a) Herstellung des heterogenen Katalysators 6,25 g von Dibutylzinndilaurat wurden mit absolutem Ethanol auf 23 ml Gesamtlösung ergänzt. Unter leichtem Rühren werden 25 g von kommerziell erhältlichem TIMREX HSAG 100 Graphit zur Imprägnierlösung gegeben. Der Träger wurde somit entsprechend seiner Ethanolaufnahmekapazität (0,92 ml/g) mit der Imprägnierlösung getränkt. Nach 1 h Tränkzeit wurde der Katalysator für 16 h bei 50°C im Trockenschrank getrocknet.
b) Herstellung des Prepolymeren

Es wurde im folgenden verfahren wie in Beispiel 1, jedoch wurden bei einem festen molaren 2,4'-MDI:PPG450-Verhältnis von 7:1 0,015 Gew.-%, bezogen auf die Gesamtansatzmenge an Polyol- und Isocyanatkomponente, des heterogenen DBTL-Aktivkohle-Katalysators dem 2,4'-MDI zugesetzt und im Anschluss an die Prepolymersynthese durch Filtration aus dem Reaktionsgemisch entfernt. Das so erhaltene Prepolymer hat eine Viskosität von η = 18 Pas bei 50 °C.

**Tabelle 4: Produktverteilung der mit einem heterogenen DBTL-Aktivkohle-Katalysator katalysierten Prepolymerreaktion (s. Vergleichsbeispiel 1) mittels GPC-Analyse nach Entfernung des monomeren Isocyanats (Angabe der Flächenprozente).**

| Molares Edukt-Verhältnis n_{MDI}:n_{PPG450} | Eduktmasse m_{PPG450} [g] | Eduktmasse m_{2,4'-MDI} [g] | Molekulargewichtsverteilung Produkt (GPC) [%] | | |
|---|---|---|---|---|---|
| | | | Diurethan (2:1-Addukt; MDI-PPG450-MDI) | Triurethan (3:2) | > 3:2 |
| 7:1 | 204,7 | 795,3 | 95,0 | 5,0 | < 0,5 |

## Patentansprüche

1. Verfahren zur Herstellung von Isocyanatgruppen enthaltenden Prepolymeren durch Umsetzung von
a) Diisocyanaten mit
b) Verbindungen mit mindestens zwei mit Isocyanatgruppen reaktiven Wasserstoffatomen in Gegenwart von
c) Katalysatoren, und nachfolgende Abtrennung der überschüssigen monomeren Diisocyanate,
**dadurch gekennzeichnet, dass**
als Diisocyanate a) asymmetrische Diisocyanate und als Katalysatoren c) metallorganische Verbindungen der Metalle aus den Gruppen IV A (Ge, Sn, Pb), IV B (Ti, Zr, Hf), V A (Sb, Bi), V B (V, Nb, Ta), VIII B (Fe, Co, Ni, Ru) als Katalysatoren eingesetzt werden und diese metallorganischen Katalysatoren vor der Abtrennung der monomeren Diisocyanate entfernt oder mit Verbindungen, ausgewählt aus der Gruppe, bestehend aus β-Hydroxycarbonsäuren, der β-Aminocarbonsäuren, der β-Ketocarbonsäuren, Ester der β-Hydroxycarbonsäuren, Ester der β-Aminocarbonsäuren, Ester der β-Ketocarbonsäuren. Ester der 1,3-Dicarbonsäuren, 1,3 Diketone, β-Hydroxyketone, 1,3-Diole, β-Aminoalkohole, Hydrazinderivate des Salicylaldehyds und Triazolderivate des Salicylaldehyds oder Mischungen davon
deaktiviert werden.

2. Verfahren nach Anspruch 1, **dadurch gekennzeichnet, dass** als asymmetrische Diisocyanate 2,4'-Toluylendiisocyanat, 2,4'-Diphenylmethandiisocyanat und/oder Isophorondiisocyanat eingesetzt werden.

3. Verfahren nach Anspruch 1, **dadurch gekennzeichnet, dass** als asymmetrisches Diisocyanat 2,4'-Diphenylmethandiisocyanat eingesetzt wird.

4. Verfahren nach Anspruch 1, **dadurch gekennzeichnet, dass** die Metallkatalysatoren als Liganden Carbonsäureanionen, Alkoholate, Enolate, Thiolate, Mercaptide sowie Alkylliganden und Kombinationen enthalten.

5. Verfahren nach Anspruch 4, **dadurch gekennzeichnet, dass** die Liganden in Form von chelatisierenden Systemen eingesetzt werden.

6. Verfahren nach Anspruch 1, **dadurch gekennzeichnet, dass** die Metallkatalysatoren ausgewählt sind aus der Gruppe, enthaltend Dimethyl-, Dibutyl- und Dioctyl-zinndilaurat, -Zinn-bis(dodecylmercaptid), -Zinn-bis(2-ethylhexylthio-glycolat), -Zinn-diacetat, -Zinn-maleat, -Zinn-bisthioglycerol; Octyl-zinntris(2-ethylhexylthioglycolat), Bis(β-methoxycabonyl-ethyl)zinndilautat, Tetraisopropyltitanat, Tetra-tert-butylorthotitanat, Tetra(2-ethylhexyl)-titanium und Titan-bis-(ethylacetoacetato)diisopropoxid, Bismut(III)-tris(2-ethylhexanoat) und Bismutlaurat.

7. Verfahren nach Anspruch 1, **dadurch gekennzeichnet, dass** die Metallkatalysatoren homogene Katalysatoren sind.

8. Verfahren nach Anspruch 1, **dadurch gekennzeichnet, dass** die Metallkatalysatoren heterogene Katalysatoren sind.

9. Verfahren nach Anspruch 1, **dadurch gekennzeichnet, dass** die Metallkatalysatoren auf Träger aufgebracht sind.

10. Verfahren nach Anspruch 1, **dadurch gekennzeichnet, dass** die metallorganischen Katalysatoren mit Lewis-sauren Metalldeaktivatoren deaktiviert werden.

11. Verfahren nach Anspruch 1, **dadurch gekennzeichnet, dass** die Verbindungen der allgemeinen Formel (I) ausgewählt sind aus der Gruppe, enthaltend Citronensäure, Äpfelsäure, Weinsäure, Acetessigsäure, 2-Chloracetessigsäure, Benzoylessigsäure, Acetondicarbonsäure, Dehydracetsäure, 3-Oxovaleriansäure und Malonsäure sowie die jeweils zugehörigen Ester.

12. Verwendung von Verbindungen, ausgewählt aus der Gruppe, bestehend aus β-Hydroxycarbonsäuren, der β-Aminocarbonsäuren, der β-Ketocarbonsäuren, Ester der β-Hydroxycarbonsäuren, Ester der β-Aminocarbonsäuren, Ester der β-Ketocarbonsäuren, Ester der 1,3-Dicarbonsäuren, 1,3 Diketone, β-Hydroxyketone, 1,3-Diole, β-Aminoalkohole, Hydrazinderivate des Salicylaldehyds und Triazolderivate des Salicylaldehyds oder Mischungen davon zur Deaktivierung von metallorganischen Verbindungen der Metalle aus den Gruppen IV A (Ge, Sn, Pb), IV B (Ti, Zr, Hf), V A (Sb, Bi), IV B (V, Nb, Ta), VIII B (Fe, Co, Ni, Ru) als Katalysatoren bei der Herstellung von Isocyanatgruppen enthaltenden Prepolymeren.

## Claims

1. A process for preparing prepolymers comprising isocyanate groups by reacting
a) diisocyanates with
b) compounds having at least two hydrogen atoms which are reactive toward isocyanate groups in the presence of
c) catalysts, and subsequently separating off the excess monomeric diisocyanates,
wherein
the diisocyanates a) used are unsymmetrical diisocyanates and the catalysts c) used are metal-organic compounds of metals of groups IV A (Ge, Sn, Pb), IV B (Ti, Zr, Hf), V A (Sb, Bi), V B (V, Nb, Ta), VIII B (Fe, Co, Ni, Ru) and these metal-organic catalysts are removed or deactivated by means of compounds selected from the group consisting of β-hydroxycarboxylic acids, β-aminocarboxylic acids, β-ketocarboxylic acids, esters of β-hydroxycarboxylic acids, esters of β-aminocarboxylic acids, esters of β-ketocarboxylic acids, esters of 1,3-dicarboxylic acids, 1,3-diketones, β-hydroxyketones, 1,3-diols, β-aminoalcohols, hydrazine derivatives of salicylaldehyde and triazole derivatives of salicylaldehyde or mixtures thereof before the monomeric diisocyanates are separated off.

2. The process according to claim 1, wherein unsymmetrical diisocyanates used are tolylene 2,4'-diisocyanate, diphenylmethane 2,4'-diisocyanate and/or isophorone diisocyanate.

3. The process according to claim 1, wherein the unsymmetrical diisocyanate used is diphenylmethane 2,4'-diisocyanate.

4. The process according to claim 1, wherein the metal catalysts comprise carboxylate anions, alkoxides, enolates, thiolates, mercaptides and alkyl ligands and combinations thereof as ligands.

5. The process according to claim 4, wherein the ligands are used in the form of chelating systems.

6. The process according to claim 1, wherein the metal catalysts are selected from the group consisting of dimethyltin, dibutyltin and dioctyltin dilaurate, bis(dodecylmercaptide), bis(2-ethylhexylthioglycolate), diacetate, maleate, bisthioglycerol; octyltin tris(2-ethylhexylthioglycolate), bis(β-methoxycarbonylethyl)tin dilaurate, tetraisopropyl titanate, tetra-tert-butyl orthotitanate, tetra(2-ethylhexyl)titanium and bis(ethylacetoacetato)titanium diisopropoxide, bismuth(III) tris(2-ethylhexanoate) and bismuth laurate.

7. The process according to claim 1, wherein the metal catalysts are homogeneous catalysts.

8. The process according to claim 1, wherein the metal catalysts are heterogeneous catalysts.

9. The process according to claim 1, wherein the metal catalysts have been applied to supports.

10. The process according to claim 1, wherein the organometallic catalysts are deactivated by means of Lewis-acid metal deactivators.

11. The process according to claim 1, wherein the compounds of the general formula (I) are selected from the group consisting of citric acid, malic acid, tartaric acid, acetoacetic acid, 2-chloroacetoacetic acid, benzoylacetic acid, acetonedicarboxylic acid, dehydroacetic acid, 3-oxovaleric acid and malonic acid and also the associated esters in each case.

12. The use of compounds selected from the group consisting of β-hydroxycarboxylic acids, β-aminocarboxylic acids, β-ketocarboxylic acids, esters of β-hydroxycarboxylic acids, esters of β-aminocarboxylic acids, esters of β-ketocarboxylic acids, esters of 1,3-dicarboxylic acids, 1,3-diketones, β-hydroxyketones, 1,3-diols, β-aminoalcohols, hydrazine derivatives of salicylaldehyde and triazole derivatives of salicylaldehyde and mixtures thereof for deactivating metal-organic compounds of metals of groups IV A (Ge, Sn, Pb), IV B (Ti, Zr, Hf), V A (Sb, Bi), IV B (V, Nb, Ta), VIII B (Fe, Co, Ni, Ru) as catalysts in the preparation of prepolymers comprising isocyanate groups.

## Revendications

1. Procédé pour la préparation de prépolymères contenant des groupes isocyanate par transformation
a) de diisocyanates avec
b) des composés présentant au moins deux atomes d'hydrogène réactifs avec les groupes isocyanate, en présence
c) de catalyseurs, et séparation consécutive des diisocyanates monomères en excès,
**caractérisé en ce qu'**on utilise, comme diisocyanates a), des diisocyanates asymétriques et, comme catalyseurs c), des composés métallo-organiques des métaux des groupes IV A (Ge, Sn, Pb), IV B (Ti, Zr, Hf), V A (Sb, Bi), V B (V, Nb, Ta), VIII B (Fe, Co, Ni, Ru) comme catalyseurs et ces catalyseurs métallo-organiques sont éliminés avant la séparation des diisocyanates monomères ou désactivés par des composés, choisis dans le groupe, constitué par les acides β-hydroxycarboxyliques, les acides β-aminocarboxyliques, les acides β-cétocarboxyliques, les esters des acides β-hydroxycarboxyliques, les esters des acides β-aminocarboxyliques, les esters des acides β-cétocarboxyliques, les esters des acides 1,3-dicarboxyliques, les 1,3-dicétones, les β-hydroxycétones, les 1,3-diols, les β-aminoalcools, les dérivés d'hydrazine de l'aldéhyde salicylique et les dérivés de triazole de l'aldéhyde salicylique ou leurs mélanges.

2. Procédé selon la revendication 1, **caractérisé en ce qu'**on utilise, comme diisocyanates asymétriques, le 2,4'-toluylènediisocyanate, le 2,4'-diphénylméthanediisocyanate et/ou l'isophoronediisocyanate.

3. Procédé selon la revendication 1, **caractérisé en ce qu'**on utilise, comme diisocyanate asymétrique, le 2,4'-diphénylméthanediisocyanate.

4. Procédé selon la revendication 1, **caractérisé en ce que** les catalyseurs métalliques contiennent, comme ligands, des anions d'acides carboxyliques, des alcoolates, des énolates, des thiolates, des mercaptides ainsi que des ligands alkyle et leurs combinaisons.

5. Procédé selon la revendication 4, **caractérisé en ce que** les ligands sont utilisés sous forme de systèmes chélatisants.

6. Procédé selon la revendication 1, **caractérisé en ce que** les catalyseurs métalliques sont choisis dans le groupe contenant le dilaurate de diméthylétain, de dibutylétain et de dioctylétain, le bis(dodécylmercaptide) de diméthylétain, de dibutylétain et de dioctylétain, le bis(thioglycolate de 2-éthylhexyle) de diméthylétain, de dibutylétain et de dioctylétain, le diacétate de diméthylétain, de dibutylétain et de dioctylétain, le maléate de diméthylétain, de dibutylétain et de dioctylétain, le bisthioglycérol de diméthylétain, de dibutylétain et de dioctylétain ; le tris(thioglycolate de 2-éthylhexyle) d'octylétain, le dilaurate de bis (β-méthoxycarbonyléthyl)étain, le titanate de tétraisopropyle, l'orthotitanate de tétra-tert-butyle, le tétra(2-éthylhexyl)-titanium et le titane-bis-(éthylacétoacétato)diisopropoxyde, le tris(2-éthylhexanoate) de bismuth (III) et le laurate de bismuth.

7. Procédé selon la revendication 1, **caractérisé en ce que** les catalyseurs métalliques sont des catalyseurs homogènes.

8. Procédé selon la revendication 1, **caractérisé en ce que** les catalyseurs métalliques sont des catalyseurs hétérogènes.

9. Procédé selon la revendication 1, **caractérisé en ce que** les catalyseurs métalliques sont appliqués sur des supports.

10. Procédé selon la revendication 1, **caractérisé en ce que** les catalyseurs métallo-organiques sont désactivés par des désactivateurs métalliques acides de Lewis.

11. Procédé selon la revendication 1, **caractérisé en ce que** les composés de formule générale (I) sont choisis dans le groupe contenant l'acide citrique, l'acide malique, l'acide tartrique, l'acide acétoacétique, l'acide 2-chloroacétoacétique, l'acide benzoylacétique, l'acide acétonedicarboxylique, l'acide déshydracétique, l'acide 3-oxovalérianique et l'acide malonique ainsi que les esters à chaque fois correspondants.

12. Utilisation de composés, choisis dans le groupe constitué par les acides ß-hydroxycarboxyliques, les acides β-aminocarboxyliques, les acides (3-cétocarboxyliques, les esters des acides β-hydroxycarboxyliques, les esters des acides β-aminocarboxyliques, les esters des acides β-cétocarboxyliques, les esters des acides 1,3-dicarboxyliques, les 1,3-dicétone, les β-hydroxycétones, les 1,3-dols, les β-aminoalcools, les dérivés d'hydrazine de l'aldéhyde salicylique et les dérivés de triazole de l'aldéhyde salicylique ou les mélanges de ceux-ci pour la désactivation de composés métallo-organiques des métaux des groupes IV A (Ge, Sn, Pb), IV B (Ti, Zr, Hf), V A (Sb, Bi), IV B (V, Nb, Ta), VIII B (Fe, Co, Ni, Ru) comme catalyseurs lors de la préparation de prépolymères contenant des groupes isocyanate.
